(19) Europäisches Patentamt
European Patent Office
Office européen des brevets

(11) EP 0 441 488 B1

(12) EUROPEAN PATENT SPECIFICATION

(45) Date of publication and mention of the grant of the patent:
**04.06.1997 Bulletin 1997/23**

(51) Int Cl.[6]: **C08G 18/65**, C08G 18/50, C08G 18/73

(21) Application number: **91300382.8**

(22) Date of filing: **17.01.1991**

# (54) Components for vehicle passenger compartments

Komponenten für das Interieur eines Personenkraftwagens

Composants pour l'intérieur de véhicules

(84) Designated Contracting States:
**DE ES FR GB IT**

(30) Priority: **09.02.1990 US 479015**

(43) Date of publication of application:
**14.08.1991 Bulletin 1991/33**

(73) Proprietor: **Huntsman Petrochemical Corporation**
**Salt Lake City, Utah 84108 (US)**

(72) Inventors:
- **Zimmerman, Robert LeRoy**
**Austin, Texas 78759 (US)**
- **Primeaux II, Dudley Joseph**
**Elgin, Texas 78621 (US)**

(74) Representative: **Goddar, Heinz J., Dr. et al**
**FORRESTER & BOEHMERT**
**Franz-Joseph-Strasse 38**
**80801 München (DE)**

(56) References cited:
**EP-A- 0 225 640** **EP-A- 0 301 718**
**EP-A- 0 379 246** **EP-A- 0 416 819**
**DE-A- 2 061 220**

- **CELLULAR POLYMERS vol. 4, no. 2, 1985, BARKING,ESSEX,UK pages 117 - 149; SAXON ET AL: 'RECENT DEVELOPMENT IN TERTIARY ALIPHATIC ISOCYANATES'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 441 488 B1

## Description

The present invention relates generally to components for the interior of the passenger compartment of a vehicle, e.g. to instrument panels, and more particularly to such components which exhibit color stability when exposed to adverse thermal conditions.

As used herein, the term "components" is intended to generically encompass a plurality of interior components of a vehicle such as an automobile. By way of illustration, instrument panels include, but are not limited to, dashboards, headrests, armrests, furniture cushions, sun visors, and the like. Heretofore, instrument panels were typically fabricated with a vinyl skin layer, usually polyvinyl chloride, adhering to a urethane foam backing. With such an arrangement, the vinyl skin layer is the exposed surface. One of the shortcomings associated with these known instrument panels is their propensity to discolour or darken when exposed to heat and sunlight. In addition to this, ultraviolet degradation can further manifest itself through a general loss of product integrity, such as cracking, and an adverse reduction in properties, such as tensile strength, tear strength and elongation, to name a few.

While such problems are encountered in many climates, they are particularly prevalent in hot climates, such as that in the southern United States, where instrument panels are exposed to extremely high temperatures for prolonged periods.

In accordance with the present invention, components such as instrument panels that are fabricated from the aliphatic spray polyurea elastomer described below are provided to overcome those problems discussed above.

Aromatic polyurea elastomers, which generally are prepared by reacting an aromatic isocyanate with an active hydrogen component in the presence of an aromatic chain extender, do not offer a viable solution to the problem, inasmuch as they exhibit poor stability when exposed to heat and sunlight.

The most widely employed aromatic chain extender is diethylenetoluenediamine (DETDA). While DETDA is not well suited for the production of ultraviolet-stable polyurea elastomers, elastomer systems fabricated from, among other things, DETDA generally exhibit favourable processing characteristics.

To provide the ultraviolet-stable system required to prepare the components of this invention, non-aromatic, i.e. aliphatic, components should be employed. For instance Rowton, R.L., CYANOETHYLATED POLYOXYPROPYLENEDIAMINES: POLYMER FORMERS OF UNIQUE REACTIVITY, Journal of Elastomers and Plastics, Vol. 9, October 1977, describes cyanoethylated polyoxypropylenepolyamines as the hydrogen component in polyurea systems to provide light stable systems. Rowton is silent, however, with respect to employing aliphatic chain extenders.

Known aliphatic chain extenders include 1,4-diaminocyclohexane and 1,6-diaminohexane. These and other known aliphatic chain extenders react very rapidly with isocyanate and, therefore, cannot be used in spray systems, inasmuch as polymerization occurs so rapidly that the polymer is virtually unsprayable. This phenomenon can also be exhibited by DETDA, see for instance, US-A-4689356, column 2, lines 17-24. Furthermore, elastomer systems prepared with known aliphatic chain extenders have notoriously exhibited processing characteristics inferior to those exhibited by systems fabricated from DETDA.

US-A-3666788 is directed to cyanoalkylated polyoxyalkylene polyamines which are specifically described as being useful as curing agents in polyurea coatings. Similarly, US-A-3714128 describes cyanoalkylated polyoxyalkylene polyamines which are useful for slowing the gelling or hardening of the polyurea component, so that good mixing of the isocyanate and amine components can be attained, which gives the sprayed material ample time to adhere and level before gelation of the polyurea coating occurs. Neither of these patents describe the polyoxyalkylene polyamines as chain extenders in aliphatic polyurea elastomer systems, nor do they describe vehicle components, e.g. instrument panels, fabricated from such systems.

US-A-4442236 describes a process for the production of moulded articles based on polyurethanes and/or polyureas. The articles are fabricated from a mixture of (a) at least one organic polyisocyanate, and (b) at least one compound, having a molecular weight of 400 to 12,000, which contains at least two isocyanate-reactive groups. The mixture is purported to produce moulded articles that are devoid of surface defects by inclusion of surface-improving additives.

US-A-4689356 describes a two-step process for preparing polyurethane and/or polyurea elastomers using mixtures of chain extenders. The mixtures comprise a hydroxyl-terminated chain extender and an aromatic amine-terminated chain extender. While US-A-4689356 makes reference to an aliphatic amine "compound" used in the chain extender mixture, there is no explicit or implicit reference thtat this compound functions as a chain extender. Rather, the aliphatic amine compound is used to furnish the active hydrogen containing component required to support the polyurethane and/or polyurea-forming reaction.

US-A-4701476 describes polyurethane and/or polyurea elastomers used to fabricate exterior automobile parts.

Polyoxyalkylene polyamines, particularly JEFFAMINE® T-403 , D-400 and D-230, are described as chain extenders in US-A-4732919, which relates to an aromatic system.

EP-A-0416819 is a document falling within the state of the art according to Article 54(3) EPC discloses that aliphatic spray polyurea elastomers comprising an (A) component including an aliphatic polyisocyanate, and a (B) component including an amine-terminated polyoxyalkylene polyol and a chain extender exhibit UV-stability, increased flexibility

and good processing characteristics when the chain extender is an amine-terminated aliphatic compound.

EP-A-0301718 discloses reaction products having molecular weights of 600 to 10,000 from certain diisocyanates with polyoxyalkylene diamines of the formula:

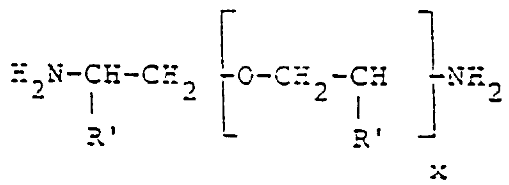

wherein R' independently represents hydrogen or methyl and x is a number having an average value of 1 to 60.

Accordingly, the present invention relates to the use of an aliphatic polyurea elastomer obtained by reacting an (A) component comprising an aliphatic isocyanate, and a (B) component comprising a polyoxyalkylene amine having a molecular weight of at least 2000, and a chain extender which is a compound of the formula:

(i)

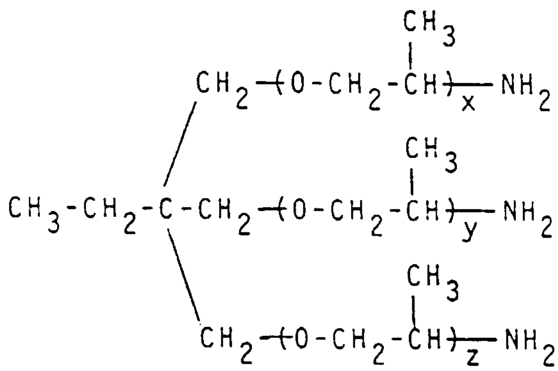

wherein x-y+z is 5.3, the average amine hydrogen equivalent weight is 67 and the average molecular weight is 440;

(ii)

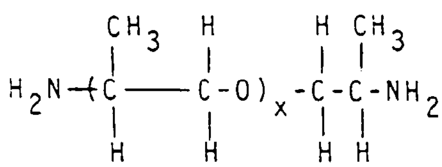

wherein x is 5.6, the average amine hydrogen equivalent weight is 100 and the average molecular weight is 400;

(iii)

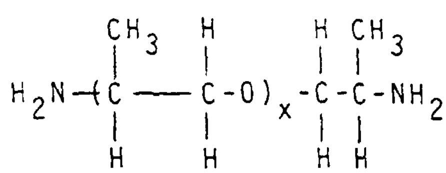

wherein x is 2.6, the average amine hydrogen equivalent weight is 57.5 and the average molecular weight is 230; or

(iv) a combination of at least two of compounds (i), (ii) and (iii),

for making a surface layer of a component for the interior of the passenger compartment of a vehicle which component comprises a body portion having thereon an exposed surface layer.

The aliphatic isocyanate preferably comprises a quasi-prepolymer of an aliphatic isocyanate and a material selected from at least one polyol, a high molecular weight polyoxyalkyleneamine or a combination of these materials.

It has advantageously been discovered that the use of the components of the present invention exhibit favourable thermal and/or ultraviolet stability resulting in improved aesthetic characteristics, as well as improved product integrity and characteristic properties.

The components of the present invention include, as an exposed surface layer, an aliphatic polyurea elastomer which generally includes two components: an (A) component and a (B) component. In particular, the (A) component includes an aliphatic isocyanate. The aliphatic isocyanates employed in component (A) are those known to one skilled in the art. Thus, for instance, the aliphatic isocyanates may be of the type described in US-A-4748192. Accordingly, they are typically aliphatic diisocyanates and, more particularly, are the trimerized or the biuretic form of an aliphatic diisocyanate, such as hexamethylene diisocyanate, or the bifunctional monomer of a tetraalkyl xylene diisocyanate, such as tetramethyl xylene diisocyanate. Cyclohexane diisocyanate is also to be considered a preferred aliphatic isocyanate. Other useful aliphatic polyisocyanates are described in US-A-4705814. They include both aliphatic and cycloaliphatic diisocyanates, for example, alkylene diisocyanates with 4 to 12 carbon atoms in the alkylene radical, such as 1,12-dodecane diisocyanate and 1,4-tetramethylene diisocyanate; and such cycloaliphatic diisocyanates as 1,3 and 1,4-cyclohexane diisocyanate, as well as any desired mixture of these isomers, 1-isocyanato-3,3,5-trimethyl-5-isocyanatomethylcyclohexane (isophorone diisocyanate); 4,4'-,2,2'- and 2,4'-dicyclohexylmethane diisocyanate as well as the corresponding isomer mixtures, and the like. The above-mentioned isocyanates can be used alone or in combination.

It is to be understood that the term aliphatic isocyanate also includes quasi-prepolymers of aliphatic isocyanates with active hydrogen containing materials. The active hydrogen containing materials can include a polyol or a high molecular weight polyoxyalkyleneamine, also referred to below as amine terminated polyethers, or a combination of these materials.

The polyols include polyether polyols, polyester diols, triols, tetrols, etc., having an equivalent weight of at least 500 and, preferably, at least 1,000, more preferably, at least 3,000. Those polyether polyols based on trihydric initiators and which are of 4,000 molecular weight and above are especially preferred. The polyethers may be prepared from ethylene oxide, propylene oxide, butylene oxide or mixtures of propylene oxide, butylene oxide and/or ethylene oxide. Other high molecular weight polyols which may be useful in this invention are polyesters of hydroxyl-terminated rubbers, e.g., hydroxyl-terminated polybutadiene. Hydroxyl-terminated quasi-prepolymers of polyols and isocyanates are also useful in this invention.

Especially preferred are polyoxyalkylene amines , including primary and secondary amine-terminated polyoxyalkylene amines of greater than 1,500 average molecular weight, having a functionality from 2 to 6, preferably from 2 to 3, and an amine equivalent weight of 750 to 4,000. Mixtures of polyoxyalkylene amines may be used. In a preferred embodiment, the polyoxyalkylene amines have an average molecular weight of at least 2,500. These materials may be made by various methods known in the art.

The polyoxyalkylene amines useful in this invention, for example, are made from an appropriate initiator to which lower alkylene oxides such as ethylene oxide, propylene oxide, butylene oxide or mixtures thereof, are added, with the resulting hydroxyl-terminated polyol then being aminated. When two or more oxides are used, they may be present as random mixtures or as blocks of the respective polyether. In the amination step, it is highly desirable that the terminal hydroxyl groups in the polyol be essentially all secondary hydroxyl groups, for ease of amination. Normally, the amination step does not completely replace all of the hydroxyl groups, but the majority of hydroxyl groups are replaced by amine groups. Therefore, in a preferred embodiment, the polyoxyalkylene amines useful in this invention have more than 50 percent of their active hydrogens in the form of amine hydrogens. If ethylene oxide is used, it is desirable to cap the hydroxyl-terminated polyol with a small amount of higher alkylene oxide, to ensure that the terminal hydroxyl groups are essentially all secondary hydroxyl groups. The polyols so prepared are then reductively aminated by known techniques, for example, as described in US-A-3654370.

In the practice of this invention, a single high molecular weight polyoxyalkylene amine may be used. Also, mixtures of high molecular weight polyoxyalkylene amines , such as mixtures of di- and trifunctional materials and/or materials of different molecular weight or different chemical composition, may be used.

Also, high molecular weight polyoxyalkylene amines are included within the scope of our invention and may be used alone or in combination with the above-mentioned polyols. The term high molecular weight is intended to include polyether amines having a molecular weight of at least 2,000. Particularly preferred are the JEFFAMINE series of

polyoxyalkylene amines available from Texaco Chemical Company; they include JEFFAMINE D-2000, JEFFAMINE D-4000, JEFFAMINE T-3000 and JEFFAMINE T-5000. These polyoxyalkylene amines are described with particularity in Texaco Chemical Company's product brochure entitled THE JEFFAMINE POLYOXYALKYLENEAMINES.

The (B) component of the polyurea elastomer used to fabricate the components of the present invention includes a polyoxyalkylene amine having a molecular weight of at least 2000, and a low molecular weight polyoxyalkylene amine chain extender. The polyoxyalkylene amine having a molecular weight of at least 2000 is preferably a diamine or triamine and, most preferably, includes a blend of diamines and/or triamines. The particular diamines and/or triamines, employed in component (B) may be the same as those described hereinabove in connection with the quasi-prepolymer of component (A).

The chain extenders of component (B) are low molecular weight polyoxyalkylene polyamines which contain terminal amine groups. One particularly preferred chain extender has the formula:

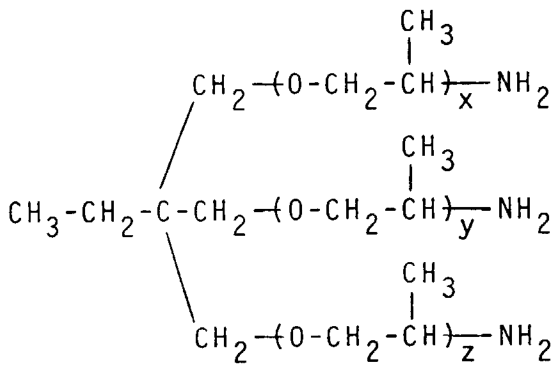

wherein x+y+z is about 5.3. The average amine hydrogen equivalent weight is about 67, the average molecular weight is about 440 and the product is commercially available from Texaco Chemical Company as JEFFAMINE T-403.

Another related polyoxypropylene polyamine chain extender has the formula:

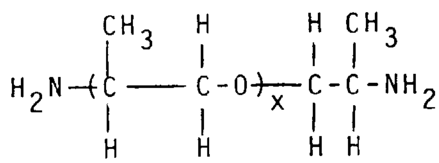

wherein x is about 5.6. This product has an average amine hydrogen equivalent weight of about 100, the average molecular weight is about 400, and it is commercially available from Texaco Chemical Company as JEFFAMINE D-400. The product having the same formula as above, wherein x is about 2.6 is also useful. This product has an average amine hydrogen equivalent weight of about 57.5, the average molecular weight is about 230, and the compound is commercially available from Texaco Chemical Company as JEFFAMINE D-230.

These aliphatic chain extenders give the elastomer system the requisite activity to yield good cure and good processing characteristics. Additionally, the thus formed aliphatic system is ultraviolet-stable, and exhibits improved product integrity and characteristics.

Other conventional formulation ingredients may be employed in component (A) or (B) of the aliphatic polyurea elastomer as needed, for example, foam stabilizers, or emulsifiers. The foam stabilizers may be an organic silane or siloxane. For example, compounds may be used having the formula:

$$RSi[O\text{-}(R_2SiO)_n\text{-}(oxyalkylene)_mR]_3$$

wherein R is alkyl of 1 to 4 carbon atoms; n is 4 to 8; m is 20 to 40; and the oxyalkylene groups are derived from propylene oxide and ethylene oxide; see, for example, US-A-3194773. Pigments or dyes, for example, titanium dioxide, may be incorporated in the elastomer system, preferably in the (B) component, to impart colour properties to the elastomer and, hence, the components having a surface of the elastomer.

Reinforcing materials, if desired, useful in the practice of our invention are known to those skilled in the art. For

example, chopped or milled glass fibres, chopped or milled carbon fibres and/or other mineral fibres are useful.

Post-curing of the elastomer portion of the components of this invention is optional. Post-curing will improve some elastomer properties, such as heat sag. Employment of post-curing depends on the desired properties of the end product.

In addition to the above-mentioned aliphatic polyurea elastomer surface layer, the components of this invention further include a body portion. The body portion can be formed of any material which is capable of supporting the surface layer. In a preferred embodiment, the body portion is a material which is capable of being foamed; most preferably a polyurethane foam. The specifics for preparing a polyurethane foam are well known by those skilled in the art. For instance, see US-A-4442236 and -4748192. Similarly, the body portion can be a foamed polyurea elastomer or a polyurethane-urea hybrid elastomer; the specifics of preparing these types of foamed elastomers are also well known by those skilled in the art.

The foaming of polyurea and polyurethane-urea elastomers is described in EP-A-0 286 005 and -0 305 678.

Generally, a blowing agent is any material which is capable of generating a gas during reaction between the isocyanate and the active hydrogen-containing component. Such materials include air, carbon dioxide, nitrogen, water, amine formates, formic acid, low-boiling haloalkanes, and the so-called "azo" blowing agents, such as azobis(formamide). Preferred are water and the low-boiling haloalkanes or mixtures thereof. Trichloromonofluromethane, dichlorodifluoromethane, dichloromonofluoromethane, dichloromethane, trichloromethane, 1,1-dichloro-l-fluoroethane, 1,1,2-trichloro-1,2,2-trifluoroethane, hexafluorocyclobutane and octafluorocyclobutane are illustrative of suitable haloalkanes.

The colour-stable components of this invention are preferably made by first providing the cured aliphatic polyurea elastomer. In a preferred embodiment, the elastomer is provided by spraying. In particular, the aliphatic polyurea elastomer is sprayed onto the surface of an open mould having a contour that corresponds to the structure of the desired end product, e.g. the instrument panels.

To effectuate the spraying of the aliphatic polyurea elastomer, the (A) component and (B) component are combined or mixed under high pressure. Most preferably, they are impingement mixed directly in high pressure spray equipment which is, for example, a GUSMER H-V proportioner fitted with a GUSMER Model GX-7 spray gun. In particular, a first and second pressurized stream of components (A) and (B), respectively, are delivered from two separate chambers of the proportioner and impinge upon each other at high velocity to effectuate an intimate mixing of the two components and, thus, the formation of the elastomer system, which is then sprayed onto the surface of the open mould via the spray gun.

The volume ratio of the (A) component to the (B) component is generally from 30 to 70 percent to 70 to 30. Preferably, component (A) and component (B) are employed in a 1:1 volume ratio.

Advantageously, the (A) and (B) components react to form the elastomer system used in the present invention without the aid of a catalyst.

To provide, for instance, an instrument panel, the open mould, which now has the aliphatic polyurea elastomer adhered to its surface, is closed and the material used to fabricate the body portion, for instance, the polyurethane foam, is introduced into the closed mould so that it adheres to the elastomeric material. Preferably, the material, most preferably the foamed material, is reaction injection moulded (RIM) into the closed mould. Instead of spraying the aliphatic polyurea elastomer in the manner described above, the components can be formed by reaction injection moulding the elastomer. If this approach is adopted, the particulars with respect to mixing the (A) and (B) components of the elastomer and introducing the elastomer into the mould are substantially identical to the spraying technique described above. In reaction injection moulding, however, the proportioner can be fitted with standard RIM equipment instead of the spray gun.

To facilitate the removal of the component from the mould, internal mould release agents can be included in the elastomer formulation. Alternatively, the surface of the mould can be pretreated witgh one or more external mould release agents, such as zinc stearatge and/or sodium oleate.

The following Examples I to IV are provided to illustrate preferred embodiments of the present invention. Example V is offered as a comparison. Example I is also provided to illustrate the properties of the aliphatic polyurea elastomer used to fabricate the components of this invention. "Parts" are parts by weight.

The following materials are used in the Examples.

| | |
|---|---|
| JEFFAMINE® T-5000 - | Polypropylene oxide triamine of about 5000 molecular weight; a product of Texaco Chemical Company. |
| JEFFAMINE® D-2000 - | Polypropylene oxide diamine of about 2000 molecular weight; a product of Texaco Chemical Company. |
| THANOL® SF-6509 - | A 6500 molecular weight polyoxyalkylene triol; a product of Arco Chemical Company. |
| QUADROL® - | A 290 molecular weight propylene oxide adduct of ethylene diamine; a product of BASF. |
| TEXACAT® ZR-70 - | N,N-dimethylaminoethoxyethanol; a product of Texaco Chemical Company. |

| | |
|---|---|
| TEXACAT® ZF -10 - | N,N,N'-trimethyl-N'-hydroxyethylbisaminoethylether; a product of Texaco Chemical Company. |
| RUBINATE® M - | Polymer methylene diisocyanate (2.7 functionality, 31.5% isocyanate content); a product of ICI. |

EXAMPLE I

The (A) component of an aliphatic polyurea elastomer was prepared by combining 55 parts of m-tetramethylxylene diisocyanate (m-TMXDI) with 45 parts of JEFFAMINE D-2000. The (B) component was prepared by combining 10.4 parts of JEFFAMINE T-5000, 41.6 parts of JEFFAMINE D-2000, 20.8 parts of JEFFAMINE T-403, 26.7 parts of JEFFAMINE D-230 and 0.5 parts of Reactint® Red. The (A) and (B) components were mixed at a 1:1 volume ratio and at an (A):(B) weight ratio of 1.09. The (A) and (B) components were mixed in a GUSMER H-V proportioner. The (A) component was maintained at a temperature of 71°C and a pressure of 19.3 MPa (2800 psi), while the (B) component was maintained at a temperature of 66°C and a pressure of 13.8 MPa (2000 psi ). The mixed product was sprayed, via a GUSMER Model GX-7 spray gun, onto a stainless steel substrate which had been pre-treated treated with a release agent. The release agent was from a zinc stearate-sodium oleate combination which was dissolved in a water-isopropyl alcohol mixture. The aliphatic spray polyurea elastomer produced exhibited a gel time of about 2.5 seconds.

The properties of the aliphatic polyurea elastomer produced in Example I were analyzed; the results are reported in Table I.

TABLE I

| | 25°C | -29°C |
|---|---|---|
| Tensile MPa(psi) | 8.63(1251) | 11.34(1645) |
| Elongation (%) | 431 | 300 |
| Tear N/m (pli) | 467.6 (267) | 1225.9 (700) |
| Shore D Hardness ( 0 sec) | 36 | - |
| (10 sec) | 25 | - |
| Moisture Vapour Transmission (permeation at 7.6 µm/0.3 mils) | 0.056 | - |
| Abrasion Resistance (mg lost) (1000 gm, 1000 REV., H-18 wheels) | 550 | - |

EXAMPLE II

The aliphatic polyurea elastomer produced in Example I was sprayed onto a textured surface mould to yield an elastomer skin layer which simulates a vinyl skin layer typically used in the manufacture of automotive instrument panels. After the elastomer was permitted to cure, the mould was closed and a urethane foam was reaction injection moulded into the closed mould. The urethane foam was prepared by combining the following components:

| Component | Parts by Weight |
|---|---|
| THANOL SF-6509 | 100 |
| QUADROL | 10 |
| CARBON BLACK (8% carbon black 92% polyol) | 2 |
| WATER | 2.2 |
| TEXACAT ZR-70 | 0.62 |
| TEXACAT ZF-10 | 0.11 |
| RUBINATE M | 59.1 |

The resulting sample was aged for 96 hours at a temperature of 49-52°C.

EXAMPLE III

An aliphatic polyurea elastomer was prepared in accordance with Example I, except that 0.5 parts of Reactint White were used instead of the Reactint Red. The elastomer was sprayed onto the textured surface mould as in Example II, and the urethane foam was reaction injection moulded as in Example II. The resulting sample was aged for 96 hours at a temperature of 49-52°C.

EXAMPLE IV

An aliphatic polyurea elastomer was prepared in accordance with Example I, except that 0.5 parts of Reactint Blue were used instead of the Reactint Red. The elastomer was sprayed onto the textured surface mould as in Example II and the urethane foam was reaction injection moulded as in Example II . The resulting sample was aged for 96 hours at a temperature of 49-52°C.

EXAMPLE V

A vinyl skin typically used in the automotive industry to fabricate instrument panels was backed with the urethane foam produced in Example II, and in the same manner. The resulting sample was aged as in Examples II to IV.

After being subjected to the adverse thermal conditions, the elastomeric surface layer of the sample produced in Example II was only slightly darker than the original polyurea. The surface of the sample produced in Example II was a pale yellowish white and the surface of the sample produced in Example IV was a light blue. Thus, visual inspection of these three samples established that there was only a negligible or insignificant degree of discolouring, if any at all. In contrast, the vinyl surface layer of the sample produced in Example V had become extremely dark in colour when subjected to the identical adverse thermal conditions.

## Claims

**1.** Use of an aliphatic polyurea elastomer obtained by reacting an (A) component comprising an aliphatic isocyanate, and a (B) component comprising a polyoxyalkylene amine having a molecular weight of at least 2000, and a chain extender which is a compound of the formula:

(i)

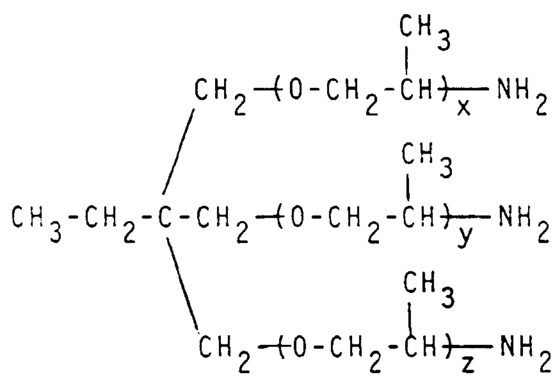

wherein x+y+z is 5.3, the average amine hydrogen equivalent weight is 67 and the average molecular weight is 440;

(ii)

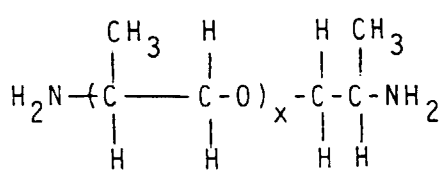

wherein x is 5.6, the average amine hydrogen equivalent weight is 100 and the average molecular weight is 400;

(iii)

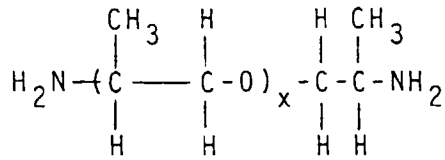

wherein x is 2.6, the average amine hydrogen equivalent weight is 57.5 and the average molecular weight is 230; or

(iv) a combination of at least two of compounds (i), (ii) and (iii),

for making a surface layer of a component for the interior of the passenger compartment of a vehicle which component comprises a body portion having thereon an exposed surface layer.

**2.** Use according to Claim 1 characterized in that the aliphatic isocyanate is hexamethylene diisocyanate, a bifunctional monomer of tetraalkyl xylene diisocyanate, cyclohexane diisocyanate, 1,12-dodecane diisocyanate, 1,4-tetramethylene diisocyanate, isophorone diisocyanate, dicyclohexylmethane diisocyanate, or a mixture thereof.

**3.** Use according to Claim 1 characterized in that the aliphatic isocyanate comprises a quasi-prepolymer of an aliphatic isocyanate and an active hydrogen-containing material.

**4.** Use according to Claim 3 characterized in that the active hydrogen-containing material is a polyol, a high molecular weight polyoxyalkylene amine, or a combination thereof.

**5.** Use according to Claim 4 characterized in that the polyol constituting the active hydrogen-containing material of the quasi-prepolymer and said amine-terminated polyoxyalkylene polyol comprise polyether polyols or polyester polyols having an equivalent weight of at least 500.

**6.** Use according to Claim 5 characterized in that the polyester polyols are polyesters of hydroxyl-terminated rubbers.

**7.** Use according to Claim 5 characterized in that the polyether polyol is a polyol based on a trihydric initiator having a molecular weight of at least 4000; an amine-terminated polyether polyol having an average molecular weight greater that 1500, a functionality of 2 to 6 and an amine equivalent weight of from 750 to 4000; or a mixture thereof.

**8.** Use according to Claim 5 characterized in that the polyether polyol is derived from an amine-terminated polyether resin having more than 50 percent of its active hydrogens in the form of amine hydrogens.

**9.** Use according to any one of Claims 1 to 8 characterized in that the body portion comprises a foamed elastomeric material.

**10.** Use according to Claim 9 characterized in that the foamed elastomeric material comprises a foamed polyurethane elastomer, a foamed polyurea elastomer or a foamed polyurethane-urea elastomer.

**Patentansprüche**

**1.** Verwendung eines aliphatischen Polyharnstoffelastomers, das erhalten wird durch Umsetzen einer (A)-Komponente, die ein aliphatisches Isocyanat umfaßt, und einer (B)-Komponente, die ein Polyoxyalkylenamin mit einem Molekulargewicht von wenigstens 2.000 und einen Kettenverlängerer umfaßt, der eine Verbindung der Formel ist:

(i)

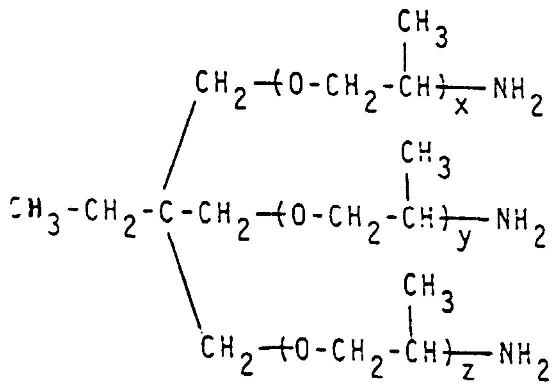

worin x+y+z 5,3 beträgt, das mittlere Aminwasserstoffäquivalentgewicht 67 beträgt und das mittlere Molekulargewicht 440 beträgt;

(ii)

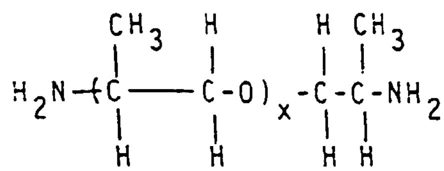

worin x 5,6 beträgt, das mittlere Aminwasserstoffäquivalentgewicht 100 beträgt und das mittlere Molekulargewicht 400 beträgt;

(iii)

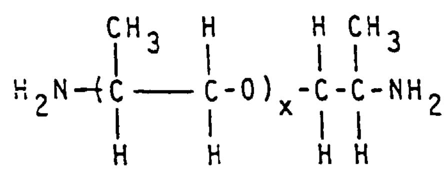

worin x 2,6 beträgt, das mittlere Aminwasserstoffäquivalentgewicht 57,5 beträgt und das mittlere Molekulargewicht 230 beträgt; oder

(iv) eine Kombination von wenigstens zwei der Verbindungen (i), (ii) und (iii),

zur Herstellung einer Oberflächenschicht einer Komponente für das Interieur des Fahrgastraumes eines Kraftfahrzeuges, wobei diese Komponente einen Rumpfteil mit einer exponierten Oberflächenschicht darauf umfaßt.

**2.** Verwendung nach Anspruch 1, dadurch gekennzeichnet, daß das aliphatische Isocyanat Hexamethylendiisocyanat, ein bifunktionelles Monomer von Tetraalkylxyloldiisocyanat, Cyclohexandiisocyanat, 1,12-Dodecandiisocyanat, 1,4-Tetramethylendiisocyanat, Isophorondiisocyanat, Dicyclohexylmethandiisocyanat oder eine Mischung derselben ist.

**3.** Verwendung nach Anspruch 1, dadurch gekennzeichnet, daß das aliphatische Isocyanat ein Quasi-Präpolymer aus einem aliphatischen Isocyanat und einem aktiven Wasserstoff enthaltenden Material umfaßt.

**4.** Verwendung nach Anspruch 3, dadurch gekennzeichnet, daß das aktiven Wasserstoff enthaltende Material ein

Polyol, ein Polyoxyalkylenamin mit hohem Molekulargewicht oder eine Kombination derselben ist.

5. Verwendung nach Anspruch 4, dadurch gekennzeichnet, daß das Polyol, das das aktiven Wasserstoff enthaltende Material des Quasi-Präpolymers darstellt, und besagtes Polyoxyalkylenpolyol mit Amin-Endgruppen Polyetherpolyole oder Polyesterpolyole mit einem Äquivalentgewicht von wenigstens 500 umfassen.

6. Verwendung nach Anspruch 5, dadurch gekennzeichnet, daß die Polyesterpolyole Polyester von Kautschuken mit Hydroxyl-Endgruppen sind.

7. Verwendung nach Anspruch 5, dadurch gekennzeichnet, daß das Polyetherpolyol auf einem Initiator mit drei Hydroxylgruppen mit einem Molekulargewicht von wenigstens 4.000 beruht; ein Polyetherpolyol mit einem mittleren Molekulargewicht von mehr als 1.500, einer Funktionalität von 2 bis 6 und einem Aminäquivalentgewicht von 750 bis 4.000; oder eine Mischung derselben ist.

8. Verwendung nach Anspruch 5, dadurch gekennzeichnt, daß das Polyetherpolyol abgeleitet ist von einem Polyetherharz mit Amin-Endgruppen, wobei mehr als 50 Prozent seiner aktiven Wasserstoffe in der Form von Aminwasserstoffen vorliegen.

9. Verwendung nach einem der Ansprüche 1 bis 8, dadurch gekennzeichnet, daß der Rumpfteil ein geschäumtes elastomeres Material umfaßt.

10. Verwendung nach Anspruch 9, dadurch gekennzeichnet, daß das geschäumte elastomere Material ein geschäumtes Polyurethanelastomer, ein geschäumtes Polyharnstoffelastomer oder ein geschäumtes Polyurethan-Harnstoff-Elastomer umfaßt.

**Revendications**

1. Utilisation d'un élastomère de polyurée aliphatique obtenu en faisant réagir (A) un constituant comprenant un isocyanate aliphatique et (B) un constituant comprenant une polyoxyalkylèneamine ayant un poids moléculaire d'au moins 2000, et un agent d'allongement de chaîne qui est un composé de formule :

(i)

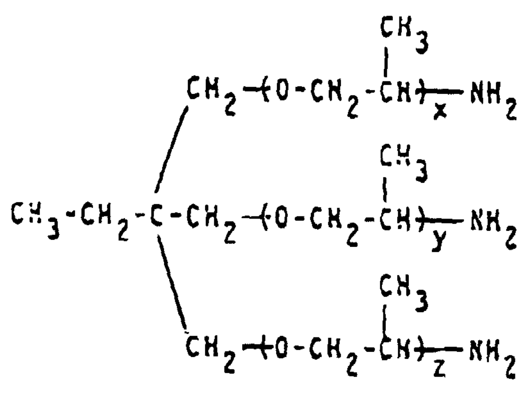

dans laquelle x+y+z est 5,3, le poids équivalent d'hydrogène d'amine est de 67 et le poids moléculaire moyen est de 440 ;

(ii)

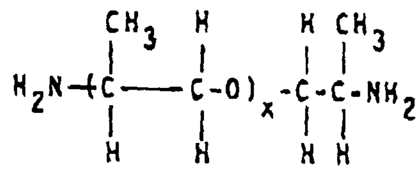

dans laquelle x est 5,6, le poids équivalent d'hydrogène d'amine est de 100 et le poids moléculaire moyen est de 400 ;

(iii)

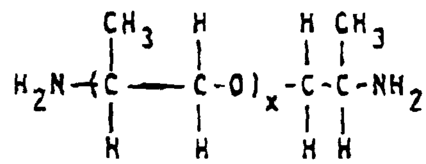

dans laquelle x est 2,6, le poids équivalent d'hydrogène d'amine moyen est de 57,5 et le poids moléculaire moyen est de 230 ; ou

(iv) une combinaison d'au moins deux des composés (i), (ii) et (iii),

pour faire une couche de surface d'un composant pour l'intérieur de l'habitacle d'un véhicule, ce composant comprenant une partie de corps sur laquelle se trouve une couche de surface exposée.

**2.** Utilisation selon la revendication 1, caractérisée en ce que l'isocyanate aliphatique est le diisocyanate d'hexaméthyléne, un monomère bifonctionnel de diisocyanate de tétraalkylxyléne, le diisocyanate de cyclohexane, le diisocyanate de 1,12-dodécane, le diisocyanate de 1,4-tétramethylène, le diisocyanate d'isophorone, le diisocyanate de dicyclohexylméthane ou un mélange de ceux-ci.

**3.** Utilisation selon la revendication 1, caractérisée en ce que l'isacyanace aliphatique comprend un quasi-prépolymère d'un isocyanate aliphatique et d'une matière contenant de l'hydrogène actif.

**4.** Utilisation selon la revendication 3, caractérisée en ce que la matière contenant de l'hydrogène actif est un polyol, une polyoxyalkylène-amine de haut poids moléculaire ou une combinaison de ceux-ci.

**5.** Utilisation selon la revendication 4, caractérisée en ce que le polyol constituant la matière contenant de l'hydrogène actif du quasi-prépolymère et ledit polyoxyalkylènepolyol à amine terminale comprennent des polyétherpolyols ou des polyester-polyols ayant un poids équivalent d'au moins 500.

**6.** Utilisation selon la revendication 5, caractérisée en ce que les polyesterpolyols sont des polyesters de caoutchoucs à groupes hydroxyles terminaux.

**7.** Utilisation selon la revendication 5, caractérisée en ce que le polyétherpolyol est un polyol à base d'un initiateur trihydrique ayant un poids moléculaire d'au moins 4000 ; un polyétherpolyol à amine terminale ayant un poids moléculaire moyen supérieur à 1500, une fonctionnalité de 2 à 6 et un poids équivalent d'amine de 750 à 4000 ; ou d'un mélange de ceux-ci.

**8.** Utisation selon la revendication 5, caractérisée en ce que le polyétherpolyol est obtenu à partir d'une résine de polyéther à amine terminale ayant plus de 50 % de ses hydrogènes actifs sous la forme d'hydrogènes d'amine.

**9.** Utilisation selon l'une quelconque des revendications 1 à 8, caractérisée en ce que la partie de corps comprend une matière élastomère expansée.

**10.** Utilisation selon la revendication 9, caractérisée en ce que la matière élastomère expansée comprend un élastomère de polyuréthane expansé, un élastomère de polyurée expansé ou un élastomère de polyuréthane-urée expansé.